# EUROPEAN PATENT SPECIFICATION

(11) **EP 3 120 591 B1**
(45) Date of publication and mention of the grant of the patent: **25.09.2019**
(21) Application number: 14712632.0
(22) Date of filing: 17.03.2014
(51) Int. Cl.: H04L 9/14, H04L 9/30, H04L 9/32, H04W 12/04, H04L 29/06, H04W 12/06

(54) **USER IDENTIFIER BASED DEVICE, IDENTITY AND ACTIVITY MANAGEMENT SYSTEM**
BENUTZERIDENTIFIKATORBASIERTE VORRICHTUNG, IDENTITÄTS- UND AKTIVITÄTSVERWALTUNGSSYSTEM
DISPOSITIF SUR LA BASE D'UN IDENTIFIANT D'UTILISATEUR, SYSTÈME DE GESTION D'IDENTITÉ ET D'ACTIVITÉ

(43) Date of publication of application: 25.01.2017
(73) Proprietor: Telefonaktiebolaget LM Ericsson (publ), 164 83 Stockholm (SE)
(72) Inventor: TEVLIN, John, 52134 Herzogenrath (DE)
(74) Representative: Ericsson
(86) International application number: PCT/EP2014/055310
(87) International publication number: WO 2015/139725

(56) References cited:
- US-A1- 2012 023 556
- US-A1- 2012 214 444

## Description

### Technical field

The present disclosure generally relates to user and device Authentication. More specifically, the present disclosure relates to a technique of single sign-on (SSO) authentication.

### Background

In the intranet and internet domains the number and variety of services and service providers is constantly growing. For an increased security, each service provider usually enforces its own identity management system. Such identity management systems are usually based on a user name and a password. As a consequence, users using a plurality of services and service providers also have a plurality of registrations with most of these service providers. Thus, the users need to remember tens, if not hundreds, of user name/password combinations. The majority of users, therefore, reuses the same user name/password combination for each registration, which downgrades the overall security of service registrations.

To avoid this weakness, single sign-on (SSO) procedures evolved and are often used, especially within corporate networks, such as an intranet. Within the public domain, such as the internet, SSO is beginning to become more popular. For instance, the Security Assertion Markup Language (SAML) was developed as an XML-framework to implement SSO for web browsing.

In order to log in users via a third party identity authentication, SAML (e.g., version 2.0) gets a wider distribution under service providers providing one or more services and/or content to users via a public network. A known SSO approach is based on the services of "Google" or "Facebook" as an identity provider. In addition, for non-web based SSO other generic certificate or digital signature based frameworks are available, such as OpenID or OpenPGP/PKI. US 2012/214444 A1 discloses a system and a method for identity management for mobile devices. US 2012/023556 A1 discloses identity management and single sign-on in a heterogeneous composite service scenario.

One disadvantage of the existing SSO technology is that most public SSO providers only provide user identification. Furthermore, service and/or content providers do not always trust such identity providers. For instance, a bank as service provider does not necessarily trust the known third party identity providers for verifying bank transactions.

Another drawback is that the address of the identity authenticator (such as its URL, domain name etc.) needs to be known by each and every service and/or content provider. This, however, severely limits the expandability of an SSO framework. Furthermore, the users require an easy to understand secure framework.

### Summary

Thus, there is a need for a simple but still secure technique for identity authentication, and in for example, for a single sign-on authentication.

According to an aspect of the present disclosure, a single sign-on (SSO) authentication system is provided which comprises a service provider node, an identity authenticator, a user terminal, and a user agent. The service provider node is configured to provide access to at least one service over a network. The identity authenticator is accessible over the network. The user terminal includes an authentication component configured to build a secure association with the identity authenticator, while the user agent is configured to access the service provider node to request a service of the provided at least one service. The service provider node is further configured to request a user identifier from a user via the user agent and to connect, once the service provider node has received the user identifier from the user agent, to the identity authenticator via the network to request the identity authenticator for verification of a given user identifier. The identity authenticator is further configured to connect to the authentication component of the user terminal in order to verify the user identifier and to provide the service provider node with verification information indicating the verification of the given user identifier.

Even if herein below it is only referred to a service provider node providing access to at least one service, this may be understood to also mean providing access to content over a network.

The identity authenticator may be configured to connect to the authentication component of the user terminal based on the given user identifier. The given user identifier can be associated with the user terminal.

The identity authenticator may store at least a pair of a user identifier and corresponding password, in order to verify the user identifier. In addition, the identity authenticator may store additional information and/or a user profile comprising user identifier, password and information capable of identifying the user terminal of the particular user and/or the authentication component thereon. Other information can also be stored with the user profile.

The user identifier can be a Mobile Subscriber Integrated Services Digital Network (MSISDN) number. When storing the MSISDN number in the user profile, the identity authenticator is capable of connecting to the authentication component of the user terminal to verify the user identifier and, hence, the user. The identity authenticator may store the MSISDN number as the user identifier or in addition to a different user identifier. As further information the identity authenticator may store an International Mobile Station Equipment Identity (IMEI). This IMEI can also be used as a user identifier.

The authentication component on the user terminal can be configured, when verifying the user identifier for the identity authenticator, to provide information on the authentication request to the user, to request a password from the user and to transmit data representing a received password to the identity authenticator via the secure association with the identity authenticator.

The authentication component can further be configured to build the secure association with the identity authenticator after the user terminal performed a device authentication with a mobile network operator. This device authentication can be achieved with an authentication server of a mobile network operator at which the user terminal registers. For instance, a Subscriber Identification Module (SIM) authentication may be performed between the authentication server of the mobile network operator and the user terminal involving a SIM card of the user terminal.

The user agent may be an application running on the user terminal or an application running on a device other than the user terminal.

The service provider node may be configured to request the user identifier from a user who utilizes both, the user agent and the user terminal. Thus, the same user utilizes a device running the user agent and the user terminal having the authentication component thereon.

The SSO authentication system may further comprise an authenticator registry configured to provide a network address of the identity authenticator. The service provider node is further configured to request from the authenticator registry a network address of the identity authenticator for the given user identifier. The network address may be an URL, domain name or other identification of the identity authenticator. The authenticator registry may store only a network address of an identity authenticator. Additionally or alternatively, the authenticator registry may store information on the identity authenticator other than a network address. For instance, the authenticator registry may store a list of user identifiers together with a network address of a particular identity authenticator through which the user identifier can best be verified. This association of an identity authenticator and a list of user identifiers can be maintained dynamically. An identity authenticator may inform the authenticator registry of a particular user identifier corresponding to a user terminal and/or authentication component on a user terminal, when the secure association has been established between the authentication component and the identity authenticator. Furthermore, the authenticator registry may store an identity authenticator profile including additional information. For instance, the profile may comprise information, whether the identity authenticator requires a one-time password (OTP). Such information can then be provided to the requesting service provider node.

The authenticator registry may further be configured to proxy the network address request to another authenticator registry. Such other authenticator registry can be on a higher architectural level than the authenticator registry. It can also be on the same architectural level, but registers identity authenticator(s) for a different region.

The service provider node can further be configured to add with the request for verification of the given user identifier at least one of a service provider identification, a user agent identification, a uniform resource locator (URL) and an indication that a one-time password (OTP) is required.

The secure association between the authentication component and the identity authenticator may be based on at least one of an X.509 certificate, a transport layer security (TLS) protocol and a public key pair based certificate.

The authentication component and the identity authenticator may be configured to build the secure association via a network being an internet protocol (IP) based network according to one of the 802.11, general packet radio service (GPRS), universal mobile telecommunications system (UMTS) and long term evolution (LTE) standard.

The service provider node, the authenticator registry and/or the identity authenticator of the above SSO authentication system can be separate entities, i.e. they may be operated independently from each other. Furthermore, these entities may be under control of different providers/operators. Alternatively or additionally one or more of the service provider node, the authenticator registry and the identity authenticator may be part of a different network. In this case, the different networks may at least be connectable with each other, in order to provide for message and/or data exchange.

According to a further aspect an identity authenticator for employment in a single sign-on (SSO) authentication system is provided. The identity authenticator comprises a receiving component configured to receive a request from a service provider node for verification of a user identifier, a connecting component configured to connect to a authentication component of a user terminal to verify a user identifier, and a providing component configured to provide the service provider node with verification information indicating the verification of the given user identifier.

The connecting component can be configured to connect to the user terminal based on the user identifier.

Furthermore, the user identifier can be a Mobile Subscriber Integrated Services Digital Network (MSISDN) number.

According to yet a further aspect, a user terminal for employment in a single sign-on (SSO) authentication system is provided. The user terminal can comprise a connecting component configured to establish a connection via a network or via a direct link between the user terminal and an identity authenticator. This identity authenticator can be the above outlined identity authenticator. The user terminal may further comprise an authentication component configured to build a secure association with the identity authenticator via the connection, and a transceiving component configured to receive and transmit data via the connection, where the transceiving component is configured to receive a verification request from the identity authenticator. The authentication component may further be configured to provide information on the verification request to a user, to request a password from the user, and to transmit, using the transceiving component, data representing the password to the identity authenticator.

According to a further aspect of the present disclosure, a method for single sign-on (SSO) authentication is provided. The method may comprise the steps of building a secure association between an authentication component of a user terminal and an identity authenticator, accessing, by a user agent, a service provider node to request a service, requesting, by the service provider node, a user identifier from a user via the user agent; receiving, by the service provider node, the user identifier from the user agent; connecting, by the service provider node once the user identifier is received, to the identity authenticator, requesting, by the service provider node, the identity authenticator for verification of a given user identifier, requesting, by the identity authenticator, verification of the user identifier at the authentication component on the user terminal, confirming, by the authentication component, authentication of the user identifier to the identity, and providing, from the identity authenticator to the service provider node, verification information indicating the verification of the given user identifier, if the user identifier is verified.

The step of requesting verification of the user identifier may comprise connecting, by the identity authenticator, to the user terminal based on the given user identifier. The given user identifier may be associated with the user terminal.

The user identifier may be a Mobile Subscriber Integrated Services Digital Network (MSISDN) number.

Furthermore, the step of confirming authentication of the user identifier can comprise providing, by the authentication component, information on the authentication request to the user, requesting the user to input a password, receiving the password by a user input and transmitting data representing the input password to the identity authenticator via the secure association.

The step of building the secure association may comprise building the secure association with the identity authenticator after performing, by the user terminal, a device authentication with a mobile network operator.

The user may utilize the user agent and the user terminal.

The method may further comprise requesting, by the service provider node, a network address of the identity authenticator from an authenticator registry, and providing, by the authenticator registry, the network address of the identity authenticator to the service provider node.

Furthermore, the method can also comprise proxying, by the authenticator registry, the network address request of the service provider node to another authenticator registry. This other authenticator registry can be on a higher architectural level than the authenticator registry. It can also be on the same architectural level, but registers identity authenticator(s) for a different region.

The step of requesting, by the service provider node, the identity authenticator for verification of a given user identifier can comprise adding to the request at least one of a service provider identification, a user agent identification, a uniform resource locator (URL) and an indication that a one-time password (OTP) is required.

In general, any of the method aspects and method steps described herein may equally be embodied in one or more suitable components, devices or units.

### Brief description of the drawings

In the following, the present disclosure will further be described with reference to exemplary embodiments illustrated in the figures, in which:
- Figure 1: is a schematic illustration of a single sign-on (SSO) authentication system according to a device embodiment;
- Figure 2: is a schematic illustration of an identity authenticator;
- Figure 3: is a schematic illustration of a user terminal;
- Figures 4A and 4B: are flowcharts illustrating a method embodiment performed in the SSO authentication system of figure 1; and
- Figure 5: is a flowchart illustrating a method embodiment performed by a user terminal and identity authenticator of the SSO authentication system of figure 1.

In the following description, for purposes of explanation and not limitation, specific details are set forth, such as specific network topologies including particular network nodes, in order to provide a thorough understanding of the present disclosure. It will be apparent to one skilled in the art that the present disclosure may be practised in other embodiments that depart from these specific details. For example, the skilled person will appreciate that the present disclosure may be practised with a user agent or user terminal different from the entities described below to illustrate the present disclosure. Also, the present disclosure may be practised with any kind of user identifier others than those described below. Furthermore, the present disclosure may be practised in any network to which mobile or stationary users may attach. For example, the present disclosure is applicable to wireline networks such as the intranet of a company with some or many separated subsidiaries or the internet, but also to cellular networks such as Global System for Mobile Communications (GSM), Universal Mobile Telecommunications Systems (UMTS), Long Term Evolution (LTE), LTE-advanced (LTE-A) networks, or to wireless local area networks (WLAN/WiFi) or similar wireless networks.

Those skilled in the art will further appreciate that functions explained herein below may be implemented using individual hardware circuitry, using software functioning in conjunction with a program microprocessor or a general purpose computer, using an application specific integrated circuit (ASIC) and/or using one or more digital signal processors (DSPs). It will also be appreciated that when the present disclosure is described as a method, it may also be embodied in a computer processor and a memory coupled to the processor, wherein the memory is encoded with one or more programs to perform the methods disclosed herein when executed by the processor.

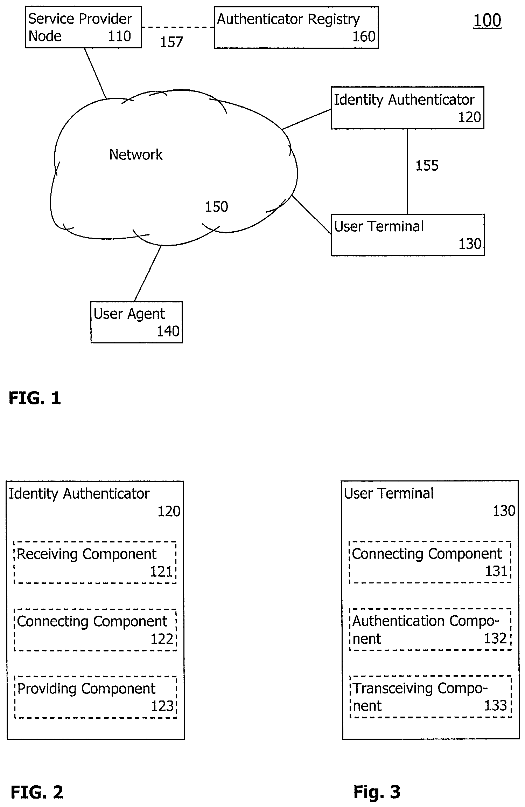

Figure 1 is a schematic illustration of an authentication system according to the present disclosure. Such authentication system may be a single sign-on (SSO) authentication system. The system comprises a plurality of entities, such as mobile or stationary devices, network nodes, servers etc. These entities may be connected to one another or be accessible by one another via a network 150. The network 150 may be an intranet or virtual LAN of a company or household or a public network, such as the internet.

A service provider can operate one or more service provider nodes 110 to provide access to at least one service over the network 150. The service provider node 110 may be a general purpose computer or a server computer connected to network 150. Besides providing access to at least one service, the service provider node may also provide access to content over the network 150. Thus, providing content can also be considered as providing a (particular) service. The content may be stored on the service provider node 110 or on a different entity, such as a content server (not shown).

The SSO authentication system may further include an identity authenticator 120 that is accessible over the network 150. The identity authenticator 120 may be implemented as a network node, server, general purpose computer or other entity accessible over network 150. It may also be implemented as software running on an existing network node. As an example only, the identity authenticator 120 may be implemented in or on the infrastructure of a mobile network operator operating a cellular network. The identity authenticator 120 may also be operated by any other third party.

A user terminal 130 may also be part of the SSO authentication system. The user terminal 130 may include an authentication component (not shown) configured to build a secure association with the identity authenticator 120. The user terminal 130 may be a user equipment or other mobile terminal. For instance, the user terminal 130 can be a cellular phone, mobile computing device, personal digital assistant etc. The authentication component may be a specific entity on the user terminal. It may be implemented as hardware, software or a combination thereof. The authentication component may, for example, be an application running on user terminal 130. The authentication component may include software capable of performing particular functions as will be described in more detail with respect to Figure 3.

Furthermore, the identity authenticator 120 and/or the user terminal 130 may store a token or other secure data generated during initiation of the secure association. This token or secure data may be generated based on information specifying the user terminal 130, the user and/or the authentication component. The token or secure data may also include user terminal identifying information, such as an MSISDN, IMEI or mobile telephone number etc.

A further entity of the SSO authentication system may be a user agent 140 configured to access the service provider node, in order to request a service of the provided at least one service. The user agent 140 can be a web browser, application or other software running on a computing device. The user agent 140 may be implemented on user terminal 130, but may also be implemented on a device different from user terminal 130. For instance, the user agent 140 may be a web browser running on a general purpose computer, such as a personal computer or a public computer in an office or internet cafe etc.

The service provider node 110 may be configured to request a user identifier from a user. This is, for example, relevant, if a user agent 140 requests access to a service provided by the service provider node 110. For example, a user of the user agent 140 enters an address of the service provider node 110 in order to access a service or content. The service provider node 110 then sends a request for a user identifier to the user agent 140, which renders the request to the user. For instance, the service provider node may send a webpage containing a field for inputting a user identifier. The web page is then displayed to the user by the user agent 140.

After the user inputs the user identifier, the user agent transmits it to the service provider node 110. The service provider node 110 may then request the identity authenticator 120 for verification of the given user identifier. For this purpose, the identity authenticator 120 is configured to connect to the authentication component of the user terminal 130, in order to verify the user identifier. The identity authenticator 120 may connect to the authentication component of the user terminal 130 based on the given user identifier. For instance, the identity authenticator 120 may store information associating the user identifier with the user terminal 130 and/or the authentication component. For instance, the association between user identifier and user terminal 130 may be accomplished by a mobile phone number, MSISDN number, IMEI or any other identification of the user terminal 130 previously stored at the identity authenticator 120 in association with the user identifier.

The authentication component of the user terminal 130 can register with the identity authenticator 120 when building the secure connection. At this time, the authentication component may transmit an identification of the user terminal 130 to the identity authenticator 120, such as the mobile phone number, MSISDN number, IMEI or any other identification information.

The authentication component of the user terminal 130 can also be configured to provide information on the authentication request to the user, when the user identifier has to be verified for the identity authenticator 120. The information provided to the user may comprise information on the service provider 110, user agent 140, a time stamp of the request, network address etc. The authentication component on the user terminal 130 can also request a password from the user. After the user has entered such password, the authentication component can transmit data representing the received password to the identity authenticator 120 via the secure association. Thus, the data representing a password may be transmitted via network 150 or via another link 155 between identity authenticator 120 and user terminal 130.

In order to identify the identity authenticator 120, the service provider node 110 may connect to an authenticator registry 160. This connection may be via network 150 or a direct link 157 between service provider node 110 and authenticator registry 160. If the authenticator registry 160 operates independent of the service provider node 110, the connection is via network 150.

The authenticator registry 160 can be configured to provide a network address of the identity authenticator 120 to the network provider node 110. The service provider node 110 can then request from the authenticator registry 160 a network address of the identity authenticator 120 for the given user identifier in case that the service provider node 110 does not have the respective network address of the identity authenticator 120.

In addition, the authenticator registry 160 can be configured to proxy the network address request to another authenticator registry (not shown) being on a higher architectural level than the authenticator registry 160. The identity authenticator of a higher architectural level may answer with a network address of another authenticator registry or of an identity authenticator 120. The other authenticator registry may also be on the same architectural level than authenticator registry 160 initiating the proxy request. The other authenticator registry may be located in a different region and has therefore different network addresses or other identifiers of one or more identity authenticators 120 depending on their location. The proxying of a network address request may be transferred from one authenticator registry 160 to another through different or the same architectural level, until one authenticator registry 160 has the network address of an identity authenticator 120 that is connected to the authentication component on the user terminal 130 corresponding to the user identifier initially entered by the user at the service provider node 110 (i.e., at the user agent 140).

All entities of the SSO authentication system have been described and illustrated as being connected to a network 150. However, one or more of the service provider node 110, the authenticator registry 160 and the identity authenticator 120 may be part of different networks. In this case, the different networks may at least be connectable with each other, in order to provide for message and/or data exchange between all entities.

Furthermore, the service provider node 110, the authenticator registry 160 and/or the identity authenticator 120 can be separate entities, i.e. they may be operated independently from each other. Furthermore, these entities may be under control of different providers or operators. Alternatively one or more of the service provider node 110, the authenticator registry 160 and the identity authenticator 120 may be operated on a single entity, i.e. a single computing device.

Referring to figure 2, an identity authenticator 120 is illustrated in more detail. The identity authenticator 120 may include a receiving component 121 configured to receive a request from a service provider node 110 for verification of a user identifier. The receiving component 121 may be a network component and/or a software capable of receiving verification requests from service provider nodes 110.

The identity authenticator 120 may further include a connecting component 122 that is configured to connect to an authentication component of a user terminal 130 to verify a user identifier. The connecting component 122 can retrieve information of a user terminal 130 corresponding to a user identifier received by the receiving component 121. For instance, the connecting component 122 may retrieve the received user identifier. It then derives a MSISDN, mobile phone number, IMEI or any other information or data associated with the received user identifier. This information or data can be derived from a memory or other storage device of identity authenticator 120. The connecting component 122 is then capable of establishing a connection to the user terminal 130 or authentication component thereon associated with the received user identifier. Furthermore, the connection can also be established based on a token or other secure data (mentioned above) exchanged between the authentication component and the identity authenticator 120.

The connecting component 122 or another component of identity authenticator 120 may then exchange information with the authentication component on the user terminal 130 through which a password is requested from the user of the user terminal 130. After reception of data representing the user password from the user terminal 130, a providing component 123 can provide the service provider node 110 with verification information indicating the verification of the given user identifier. The providing component 123 may be configured to verify the received user password with a password stored at the identity authenticator 120 for the particular user identifier. For instance, the password may be securely stored in the user profile for the received user identifier. Only if the passwords match, the verification information is provided to the service provider node 110. Otherwise, data representing a verification failure is provided.

With respect to figure 3, a user terminal 130 is illustrated in more detail and will be described below. The user terminal 130 may include a connecting component 131 that is configured to establish a connection via a network 150 or via a direct link 155 between the user terminal 130 and an identity authenticator 120. The connecting component 131 may be a piece of hardware and/or software that is capable of establishing the connection. The connection can be an internet protocol (IP) based connection according to one of the 802.11, General Packet Radio Service (GPRS), Universal Mobile Telecommunications System (UMTS), Long Term Evolution (LTE), and LTE-Advanced (LTE-A) standard. The connecting component 131 and user terminal 130 are not restricted to the above-identified networks, links, protocols and standards.

The user terminal 130 may further include an authentication component 132 configured to build a secure association with the identity authenticator 120 via the connection established by connecting component 131. The authentication component 132 may also be a piece of hardware and/or software or a combination thereof. For instance, the authentication component 132 may, for example, be an application running on the user terminal 130. The establishing of a secure association may include the exchange of secure information, such as certificates, public keys, digitally signed information etc. For instance, the secure association may be based on at least one of an X.509 certificate, a transport layer security (TLS) protocol and a public key pair based certificate. The connecting component 131 and user terminal 130 are not restricted to the above-identified secure association.

The connecting component 131 and/or the authentication component 132 can be part of a specific entity on the user terminal 130. For instance, such specific entity can be implemented in hardware and/or software and may perform the functions described with respect to the connecting component 131 and the authentication component 132. It may also perform only some of the described functions.

In any case, the connecting component 131 may be a conventional network communication module, while the authentication component 132 interacts with the network communication module in order to establish the secure association with the identity authenticator 120.

Furthermore, the authentication component 132 may be configured to, at a point of time later than the establishing of the secure association, provide information on a verification request to a user of the user terminal 130, to request a password from the user, and to generate data representing the password.

The user terminal 130 may further include a transceiving component 133 configured to receive and transmit data via the connection established by connecting component 131. The transceiving component can receive a verification request from an identity authenticator 120. Furthermore, the transceiving component 133 can be used to transmit to the identity authenticator 120 the data representing the password and generated by the authentication component. Alternatively, the transceiving component receives the verification of the password from the authentication component and then generates and transmits data representing the password to the identity authenticator 120.

In addition or alternatively to the above, a specific entity can be implemented on the user terminal 130. This specific entity can be hardware, software or a combination thereof. The specific entity may include hardware and/or software capable of performing at least some of the functions of the connecting component 131, the authentication component 132 and the transceiving component 133. Alternatively, the specific entity may communicate with the connecting component 131, authentication component 132 and transceiving component 133, if they are independent components of user terminal 130.

Furthermore, the user terminal 130 may comprise a Subscriber Identification Module (SIM), like e.g. a SIM card (not shown). The user terminal 130 can perform device authentication with an authentication server (not shown) of a mobile network operator at which the user terminal registers. For instance, a SIM authentication is performed between the authentication server of the mobile network operator and the user terminal 130 involving the SIM card.

In addition or alternatively, the authentication component 132 may comprise a SIM card. This would allow the implementation of the present disclosure on any computing device other than mobile phones. The authentication component 132 can then authenticate the user identifier via any data network independently of a mobile network operator.

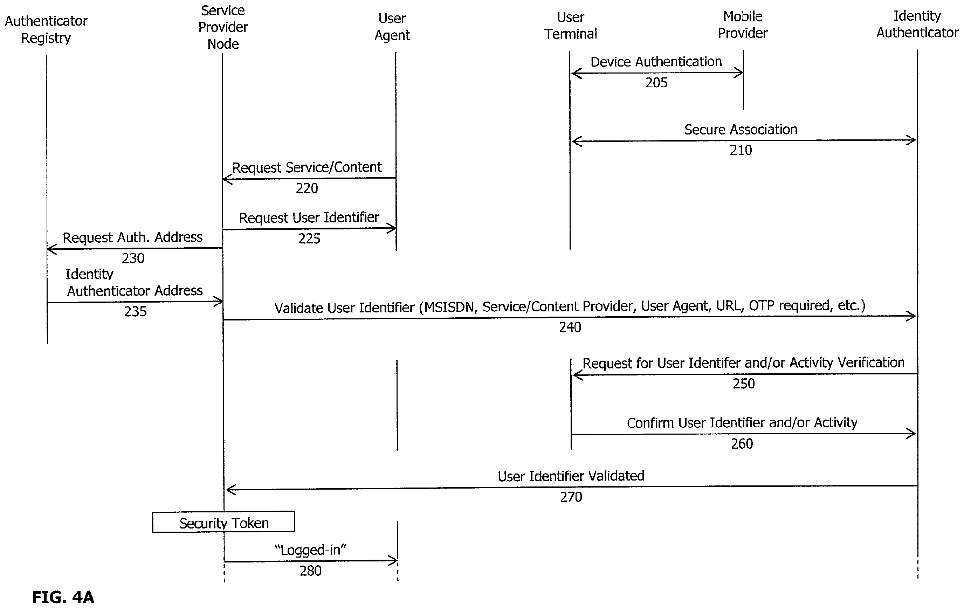

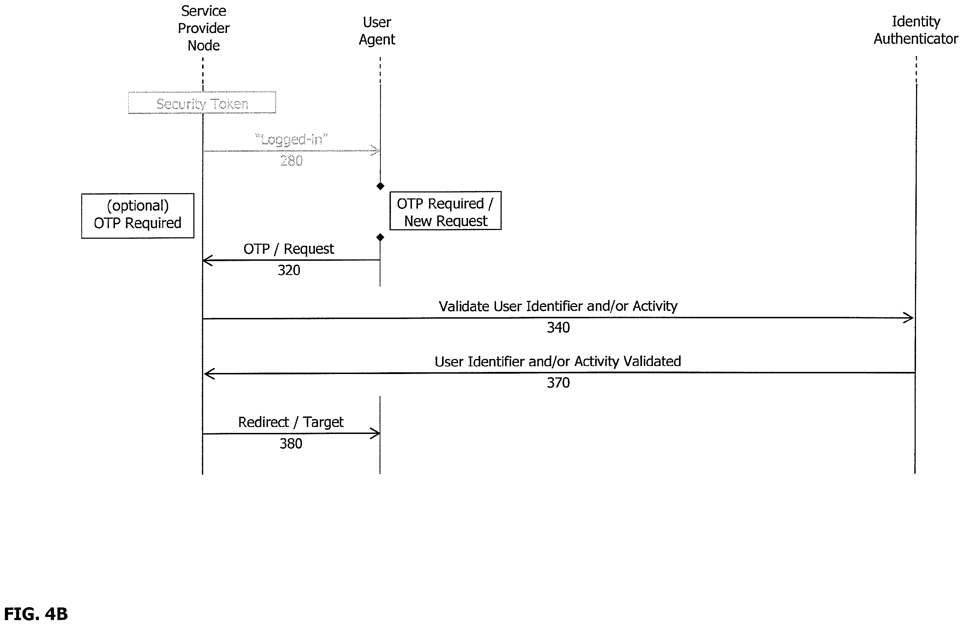

With respect to figures 4A and 4B, a method according to the present disclosure is illustrated and described below. As will be apparent from the description of figures 4A and 4B the present disclosure overcomes the deficiencies of conventional SSO frameworks due to legal, technical and cryptologic barriers preventing the users from trusting conventional SSO frameworks. For example, most public SSO providers (for example Google, Facebook etc.) only provide one layer of security, i.e. user identification. In order to obtain better security, however, more levels of security may be introduced, for example the three levels of authentication, identification and authorisation. This includes device/user authentication ("Is the device/person communicating with an entity authorised and/or provisioned to actually communicate with the entity?"), user identification ("Is the person using the device really the person they claim to be?") and activity authorisation ("Is the user aware of what his/her 'identity' is trying to do?").

An SSO provider having only one security level, is inherently weak, since often weak passwords like birthdays, pet names or other simple information are used. Furthermore, users and/or service providers do not always trust the identity authenticator. For instance, a user may not trust an SSO provider for handling verification of bank transactions, while they would trust this provider for handling less important personal information, such as photos etc.

Referring to figure 4A, at step 205 a user terminal 130 initiates a device authentication towards a mobile network operator, for instance, when switching on the user terminal 130. Usually a user enters a PIN-code into the user terminal which can then be authenticated by the mobile network operator (GSM/UMTS/SIM verification).

In case that the user terminal 130 does not include a SIM card, a device authentication may also be performed with an identity authenticator 120 or other third party component. This device authentication may include the use of an X.509 certificate or a public key pair based certificate.

Once a data connection, such as an IP connection, is established between the user terminal 130 and a network 150, the authentication component 132 on the user terminal 130 builds a secure association towards a respective identity authenticator 120 at step 210. The network connection may be established either via WiFi/WLAN or GPRS/UMTS/LTE. The establishing of a secure association may require the provision of a user certificate (such as an X.509 certificate) allowing mutual device/server authentication. This authentication between the authentication component 132 and the identity authenticator 120 may comprise the use of a TLS protocol or Internet Protocol Security (IPSEC). An enhanced security may be accomplished using a public key pair based certificate instead of a simple digital signature based data exchange. When the secure association has been established, the user terminal is authenticated, i.e., a device authentication is performed.

When the secure association has been established, the identity authenticator 120 can register a user identifier together with its own identity, such as a server address, at one or more authenticator registries 160. Thus, an authenticator registry 160 may identify the identity authenticator 120 corresponding to a user identifier as will be outlined in more detail further below.

Subsequently (immediately or at a later point of time) a user of the user terminal 130 may want to perform a certain activity which requires user identification, such as access a service or content via a network 150 (step 220). For instance, the user may want to browse the internet, read/write an e-mail, place a voice or video call over the internet (VoIP) etc. To do so, the user utilizes a user agent 140. This user agent 140 may be web browser, e-mail program, (video) call application etc. Furthermore, the user agent 140 may be executed on a device different than the user terminal 130, such as a computer in an internet cafe, an office or at home. Alternatively, the user agent 140 may also be executed on the user terminal 130 itself.

In order to accomplish the user's request for web browsing, e-mail reading/writing etc., the user agent 140 connects to a service provider node 110 via network 150. For instance, for web browsing, the user agent 140 sends an HTTP/HTTPS/FTP/FTPS request to the service provider node 110. The user agent thereby requests (step 220) a service or content from service provider node 110. The service provider node 110 requests (step 225) a user identifier in order to identify the user requesting the service/content. This user identifier can be a Mobile Subscriber Integrated Services Digital Network (MSISDN) number. Other user identifiers can also be employed. For instance, a telephone number of a mobile phone, a corresponding IMEI etc. may be used.

In order to request this user identifier, the user is presented with a form or other input display in order to input the user identifier. Additionally or alternatively, the user is presented with an audible request through a headphone. The user can input the user identifier via a key input or a speech input. Also alternatively, the user agent 140 may have stored the user identifier, e.g. from a previous session, and can then provide it to the service provider node 110 with the request 220 for a service/content.

Once the service provider node 110 has received the user identifier, it tries to connect to an identity authenticator 120 for the given user identifier. The service provider node 110 may be already aware of the identity authenticator 120 corresponding to the given user identifier. On the other hand, if the service provider node 110 does not know a network address of the correct identity authenticator 120, the service provider node 110 queries an authenticator registry 160 at step 230. This authenticator registry 160 may be the nearest to the service provider node 110. The service provider node 110 may always request the same authenticator registry 160.

The authenticator registry 160 may be operated by either the same operator of the identity authenticator 120 or another third party, such as a mobile network operator, a Domain Name System (DNS) provider, or the service provider of service provider node 110. In any case, a secure, commercial and legally binding agreement need to exist between the authenticator registry provider and the identity authenticator provider.

The authenticator registry 160 can be implemented in a redundant manner and be part of a global geographically layered hierarchy of registries. If a given user identifier is not provisioned by the authenticator registry 160, i.e. no identity authenticator 120 has registered the user identifier with its own identification, the authenticator registry 160 acts as a proxy towards the global hierarchy to locate the corresponding authenticator registry. A secure, commercial and legally binding agreement need to exist between authenticator registry layers.

If the authenticator registry 160 cannot locally or globally resolve a server address of an identity authenticator 120 for the given user identifier, the user identifier is not provisioned and authentication fails. Otherwise, the authenticator registry 160 returns at step 235 an identity authenticator address, such as an IP address or server name or domain name.

The service provider node 110 receiving the identity authenticator address at step 235 now contacts this identity authenticator 120 to validate the user identifier at step 240. The connection to the identity authenticator 120, again, preferably uses secure channels via network 150. For instance, an SSL or TLS protocol may be employed to contact the identity authenticator 120.

In order to validate the user identifier, i.e. perform user identification and user authentication, the service provider node 110 transmits at least the given user identifier to the identity authenticator 120. Additional information, such as a service provider node identification, user agent identification, a URL of the service provider node and/or the user agent device, and/or an indication that a one-time password (OTP) is required, may also be transmitted.

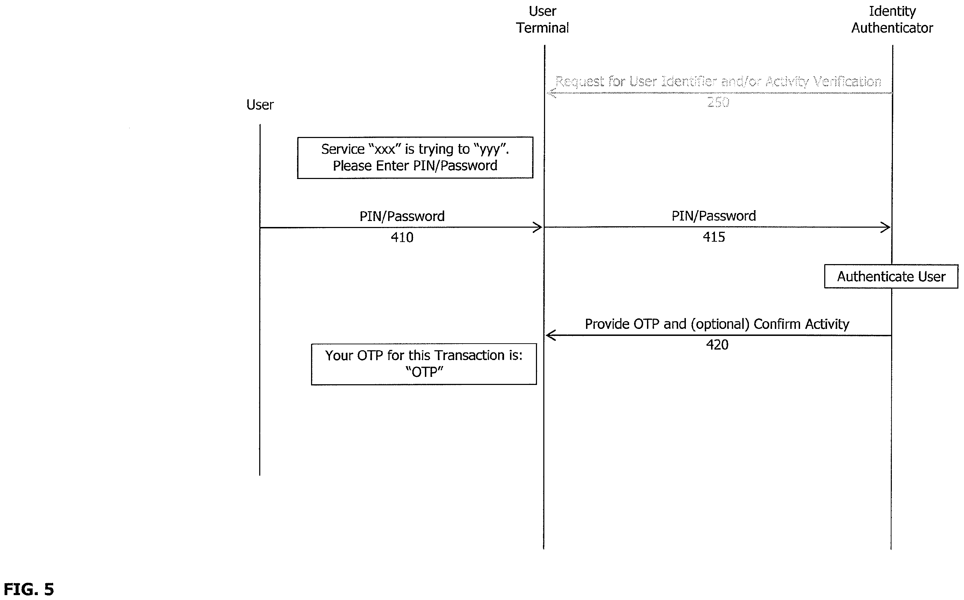

Next, the identity authenticator 120 requests at step 250 verification of the user identifier and/or activity at the user terminal 130. This request for verification is further illustrated and explained with respect to figure 5.

The user terminal 130 subsequently confirms at step 260 the user identifier and/or activity to the identity authenticator 120. For instance, a PIN or password associated with the user identifier is transmitted from user terminal 130 to identity authenticator 120.

The identity authenticator 120 now performs user authentication based on the user identifier received from service provider node 110 and the PIN or password received from the user terminal 130 (at steps 240 and 260, respectively). In case that the password is incorrect or the transmission(s) between the authentication component 132 on the user terminal 130 and the identity authenticator 120 fails (e.g. due to a timeout, device being switched off etc.) authentication of the user fails.

In case of a valid user authentication, the identity authenticator 120 may further generate a one-time password (OTP) for the corresponding activity. The identity authenticator 120 provides verification information to the service provider node 110 indicating the verification of the given user identifier at step 270. Furthermore, if an OTP has been generated (with or without previous OTP request from service provider node 110 at step 240), it can be send to the user terminal 130 and to the service provider node 110 at step 270. For instance, the identity authenticator 120 may return a signed security token or certificate which validates the user identifier to the service provider node 110. This token or certificate may include a given amount of time, for example several hours, before re-authentication is required. Together with this token or certificate the identity authenticator 120 may transmit data to the service provider node 110 indicating whether an OTP is required and/or provided.

The service provider node 110 now indicates that the user has "logged in" at step 280. This can be accomplished by sending corresponding information to user agent 140, such as a webpage for a web browser or confirmation information to an e-mail client program etc.

Referring now to figure 4B an OTP validation and a subsequent user and/or activity validation is illustrated. Since the OTP validation and subsequent user and/or activity validation are almost similar, figure 4B illustrates only one validation cycle for simplicity of the figure.

For instance, at step 270, a secure token indicating that an OTP is required has been sent to service provider node 110. The user agent 140 - being informed on the OTP requirement by service provider node 110 - is then capable of requesting the OTP from the user. The user agent may transmit an OTP input by the user to the service provider node 110 at step 320. This transmission may include further information or data, such as an HTTP/HTTPS/FTP/FTPS request. The service provider node 110 validates the provided OTP with identity authenticator 120 at step 340. It, therefore, transmits the OTP to the identity authenticator 120. The identity authenticator 120 checks the transmitted OTP with the OTP generated after the user and/or activity validation at step 260.

If the OTP matches the generated OTP, the identity authenticator 120 sends a validation indication to the service provider node 110 at step 370. At this time, the service provider node 110 can indicate to the user via user agent 140 that the OTP was correct. The service provider node 110 then redirects the user agent to the requested service/content or provides a target resource to the user agent 140 at step 380.

In case that the user agent 140 provides a new request to the service provider node 110, the service provider node may fulfil the new request (see step 380) as long as the secure token is valid.

In case of a different user agent 140 requesting a service at step 320, the user agent may provide the previously used user identifier to the service provider node 110. For instance, the user may now perform a different action than the action requested at step 220. As an example only, after browsing the web, the user may now retrieve e-mails with an e-mail program. The user agent 140, therefore, requests at step 320 the service provider node 110 for the respective service and/or content. If the service provider node 110 still has a valid security token for the given user identifier, the service provider node 110 may instantly redirect the user agent 140 to the respective site or allow access to the content at step 380. Thus, the user does not need to re-enter a user name or password, since the SSO authentication system is still aware of the authenticated user and device.

In case that the user agent 140 requests the service or content at step 320 from a service provider node 110 different than the service provider node previously used, a validation of the user and/or activity needs to take place with the identity authenticator 120 again (see step 340). According to a possible implementation, the user agent 140 may have a valid user session, so that it may automatically provide the user identifier to the service provider node 110 with this new request at step 320. User validation steps 340 and 370 are then handled by identity authenticator 120 in the same manner as explained above (see steps 250 and 260).

Referring now to figure 5, a user and/or activity verification is illustrated. The user terminal 130 receiving the request for verification at step 250 provides information on the authentication request to the user. This provision may be accomplished by the authentication component 132 on the user terminal 130. The user is also requested to input a password. For instance, if the user terminal has a display, information may be displayed to the user, such as "Service 'xxx' is trying to 'yyy'. Please enter the corresponding PIN/password." An audible presentation of this information to the user is also possible.

When the authentication component 132 receives the PIN/ password by a user input at step 410, it transmits at step 415 data representing the input PIN/ password to the identity authenticator 120. This transmission may be accomplished via the secure association established at step 210. If an OTP has been generated by identity authenticator 120 after user authentication, the identity authenticator 120 provides the OTP and optionally a confirmation of the validity of the PIN/password to the user terminal 130. The user terminal 130 may present the OTP to the user on a display or via an audible output. The user terminal may also store the OTP for further use by the user.

## Claims

1. A single sign-on, SSO, authentication system (100) comprising:
a service provider node (110) configured to provide access to at least one service over a network (150);
an identity authenticator (120) accessible over the network;
a user terminal (130) including a authentication component (132) configured to build a secure association with the identity authenticator; and
a user agent (140) configured to access the service provider node to request a service of the provided at least one service,
wherein the service provider node (110) is further configured to request a user identifier from a user via the user agent (140) and to connect, once the service provider node (110) has received the user identifier from the user agent (140), to the identity authenticator (120) via the network (150) to request the identity authenticator (120) for verification of a given user identifier, and
wherein the identity authenticator (120) is further configured to connect to the authentication component (132) of the user terminal (130) to verify the user identifier and to provide the service provider node (110) with verification information indicating the verification of the given user identifier.

2. The SSO authentication system (100) according to claim 1, wherein the authentication component (132) on the user terminal (130) is further configured, when verifying the user identifier for the identity authenticator (120), to provide information on the authentication request to the user, to request a password from the user and to transmit data representing a received password to the identity authenticator (120) via the secure association with the identity authenticator (120).

3. The SSO authentication system (100) according to claim 1 or 2, wherein the authentication component (132) is configured to build the secure association with the identity authenticator (120) after the user terminal (130) performed a device authentication with a mobile network operator.

4. The SSO authentication system (100) according to any of claims 1 to 3, further comprising:
an authenticator registry (160) configured to provide a network address of the identity authenticator (120),
wherein the service provider node (110) is further configured to request from the authenticator registry (160) a network address of the identity authenticator (120) for the given user identifier.

5. The SSO authentication system (100) according to any of claims 1 to 4, wherein the service provider node (110) is further configured to add with the request for verification of the given user identifier at least one of a service provider identification, a user agent identification, a uniform resource locator, URL, and an indication that a one-time password, OTP, is required.

6. An identity authenticator (120) for employment in a single sign-on, SSO, authentication system (100), the identity authenticator (120) comprising:
a receiving component (121) configured to receive a request from a service provider node (110) for verification of a user identifier;
a connecting component (122) configured to connect to a authentication component (132) of a user terminal (130) to verify a user identifier; and
a providing component (123) configured to provide the service provider node (110) with verification information indicating the verification of the given user identifier.

7. A user terminal (130) for employment in a single sign-on, SSO, authentication system (100), the user terminal (130) comprising:
a connecting component (131) configured to establish a connection via a network (150) or via a direct link (155) between the user terminal (130) and an identity authenticator (120) according to claim 6;
an authentication component (132) configured to build a secure association with the identity authenticator (120) via the connection; and
a transceiving component (133) configured to receive and transmit data via the connection, wherein the transceiving component (133) is configured to receive a verification request from the identity authenticator (120),
wherein the authentication component (132) is further configured to provide information on the verification request to a user, to request a password from the user, and to generate data representing the password, and wherein the transceiving component (133) is configured to transmit the data to the identity authenticator (120).

8. A method for single sign-on, SSO, authentication, the method comprising:
building (210) a secure association between a authentication component of a user terminal and an identity authenticator;
accessing (220), by a user agent, a service provider node to request a service;
requesting (225), by the service provider node, a user identifier from a user via the user agent;
receiving, by the service provider node, the user identifier from the user agent;
connecting, by the service provider node once the user identifier is received, to the identity authenticator;
requesting (240), by the service provider node, the identity authenticator for verification of a given user identifier;
requesting (250), by the identity authenticator, verification of the user identifier at the authentication component on the user terminal;
confirming (260), by the authentication component, authentication of the user identifier to the identity authenticator; and
providing (270), from the identity authenticator to the service provider node, verification information indicating the verification of the given user identifier, if the user identifier is verified.

9. The method according to claim 8, wherein requesting verification of the user identifier comprises connecting, by the identity authenticator, to the user terminal based on the given user identifier, the given user identifier being associated with the user terminal.

10. The method according to claim 8 or 9, wherein confirming authentication of the user identifier comprises providing, by the authentication component, information on the authentication request to the user, requesting the user to input a password, receiving (410) the password by a user input and transmitting (415) data representing the input password to the identity authenticator via the secure association.

11. The method according to any of claims 8 to 10, wherein building the secure association comprises building the secure association with the identity authenticator after performing (205), by the user terminal, a device authentication with a mobile network operator.

12. The method according to any of claims 8 to 11, further comprising:
requesting (230), by the service provider node, a network address of the identity authenticator from an authenticator registry; and
providing (235), by the authenticator registry, the network address of the identity authenticator to the service provider node.

13. The method according to claim 12, further comprising:
proxying, by the authenticator registry, the network address request of the service provider node to another authenticator registry being on a higher architectural level than the authenticator registry.

14. The method according to any of claims 8 to 13, wherein requesting, by the service provider node, the identity authenticator for verification of a given user identifier comprises adding to the request at least one of a service provider identification, a user agent identification, a uniform resource locator, URL, and an indication that a one-time password, OTP, is required.

15. A computer program, comprising program code which, when executed by one or more processors, causes the one or more processors to operate according to the method of any of claims 8 to 14.

## Patentansprüche

1. System (100) zur Authentifizierung einer einmaligen Anmeldung, SSO, umfassend:
einen Dienstanbieterknoten (110), der zum Bereitstellen von Zugriff auf mindestens einen Dienst über ein Netzwerk (150) konfiguriert ist;
einen Identitätsauthentifikator (120), auf den über das Netzwerk zugegriffen werden kann,
ein Benutzerendgerät (130), das eine Authentifizierungskomponente (132) umfasst, die zum Erstellen einer sicheren Assoziation mit dem Identitätsauthentifikator konfiguriert ist; und
einen Benutzeragenten (140), der so konfiguriert ist, dass er zum Anfordern eines Dienstes des mindestens einen bereitgestellten Dienstes auf den Dienstanbieterknoten zugreift,
wobei der Dienstanbieterknoten (110) ferner so konfiguriert ist, dass er eine Benutzerkennung von einem Benutzer über den Benutzeragenten (140) anfordert und, sobald der Dienstanbieterknoten (110) die Benutzerkennung vom Benutzeragenten (140) empfangen hat, über das Netzwerk (150) eine Verbindung zum Identitätsauthentifikator (120) herstellt, um den Identitätsauthentifikator (120) zur Verifizierung einer gegebenen Benutzerkennung aufzufordern, und
wobei der Identitätsauthentifikator (120) ferner so konfiguriert ist, dass er eine Verbindung zur Authentifizierungskomponente (132) des Benutzerendgeräts (130) herstellt, um die Benutzerkennung zu verifizieren und den Dienstanbieterknoten (110) mit Verifizierungsinformationen zu versehen, welche die Verifizierung der gegebenen Benutzerkennung angeben.

2. SSO-Authentifizierungssystem (100) nach Anspruch 1, wobei die Authentifizierungskomponente (132) auf dem Benutzerendgerät (130) ferner so konfiguriert ist, dass sie beim Verifizieren der Benutzerkennung für den Identitätsauthentifikator (120) Informationen über die Authentifizierungsanforderung an den Benutzer bereitstellt, ein Kennwort vom Benutzer anfordert und Daten, die ein empfangenes Kennwort darstellen, über die sichere Assoziation mit dem Identitätsauthentifikator (120) an den Identitätsauthentifikator (120) sendet.

3. SSO-Authentifizierungssystem (100) nach Anspruch 1 oder 2, wobei die Authentifizierungskomponente (132) so konfiguriert ist, dass sie die sichere Assoziation mit dem Identitätsauthentifikator (120) erstellt, nachdem das Benutzerendgerät (130) eine Geräteauthentifizierung bei einem Mobilfunknetzwerkbetreiber durchgeführt hat.

4. SSO-Authentisierungssystem (100) nach einem der Ansprüche 1 bis 3, ferner umfassend:
ein Authentifikatorregister (160), das zum Bereitstellen einer Netzwerkadresse des Identitätsauthentifikators (120) konfiguriert ist,
wobei der Dienstanbieterknoten (110) ferner zum Anfordern einer Netzwerkadresse des Identitätsauthentifikators (120) vom Authentifikatorregister für die gegebene Benutzerkennung (160) konfiguriert ist.

5. SSO-Authentisierungssystem (100) nach einem der Ansprüche 1 bis 4, wobei der Dienstanbieterknoten (110) ferner so konfiguriert ist, dass er mindestens eine von einer Dienstanbieteridentifikation, einer Benutzeragentenidentifikation, einer URL (Uniform Resource Locator) und einer Angabe, dass ein einmaliges Kennwort, OTP, erforderlich ist, zur Anforderung der Verifizierung der gegebenen Benutzerkennung hinzufügt.

6. Identitätsauthentifikator (120) zum Einsatz in einem System (100) zur Authentifizierung einer einmaligen Anmeldung, SSO, wobei der Identitätsauthentifikator (120) umfasst:
eine Empfangskomponente (121), die zum Empfangen einer Anforderung einer Verifizierung einer Benutzerkennung von einem Dienstanbieterknoten (110) konfiguriert ist;
eine Verbindungskomponente (122), die zum Herstellen einer Verbindung zu einer Authentifizierungskomponente (132) eines Benutzerendgeräts (130) zum Verifizieren einer Benutzerkennung konfiguriert ist; und
eine Bereitstellungskomponente (123), die so konfiguriert ist, dass sie den Dienstanbieterknoten (110) mit Verifizierungsinformationen versieht, welche die Verifizierung der gegebenen Benutzerkennung angeben.

7. Benutzerendgerät (130) zum Einsatz in einem System (100) zur Authentifizierung einer einmaligen Anmeldung, SSO, wobei das Benutzerendgerät (130) umfasst:
eine Verbindungskomponente (131), die zum Herstellen einer Verbindung über ein Netzwerk (150) oder über eine direkte Verbindungsstrecke (155) zwischen dem Benutzerendgerät (130) und einem Identitätsauthentifikator (120) nach Anspruch 6 konfiguriert ist;
eine Authentifizierungskomponente (132), die zum Erstellen einer sicheren Assoziation mit dem Identitätsauthentifikator (120) über die Verbindung konfiguriert ist; und
eine Sendeempfangskomponente (133), die zum Empfangen und Senden von Daten über die Verbindung konfiguriert ist, wobei die Sendeempfangskomponente (133) zum Empfangen einer Verifizierungsanforderung vom Identitätsauthentifikator (120) konfiguriert ist,
wobei die Authentifizierungskomponente (132) ferner zum Bereitstellen von Informationen über die Verifizierungsanforderung an einen Benutzer, Anfordern eines Kennworts vom Benutzer und Erzeugen von Daten, die das Kennwort darstellen, konfiguriert ist, und wobei die Sendeempfangskomponente (133) zum Senden der Daten an den Identitätsauthentifikator (120) konfiguriert ist.

8. Verfahren zur Authentifizierung einer einmaligen Anmeldung, SSO, umfassend:
Erstellen (210) einer sicheren Assoziation zwischen einer Authentifizierungskomponente eines Benutzerendgeräts und einem Identitätsauthentifikator;
Zugreifen (220) auf einen Dienstanbieterknoten durch einen Benutzeragenten zum Anfordern eines Dienstes;
Anfordern (225) einer Benutzerkennung von einem Benutzer durch den Dienstanbieterknoten über den Benutzeragenten;
Empfangen der Benutzerkennung durch den Dienstanbieterknoten vom Benutzeragenten;
Herstellen durch den Dienstanbieterknoten einer mit Verbindung zum Identitätsauthentifikator, sobald die Benutzerkennung empfangen wird;
Auffordern (240) des Identitätsauthentifikators durch den Dienstanbieterknoten zur Verifizierung einer gegebenen Benutzerkennung;
Anfordern (250) einer Verifizierung der Benutzerkennung an der Authentifizierungskomponente auf dem Benutzerendgerät durch den Identitätsauthentifikator;
Bestätigen (260) der Authentifizierung der Benutzerkennung durch die Authentifizierungskomponente für den Identitätsauthentifikator; und
Bereitstellen (270) von Verifizierungsinformationen, welche die Verifizierung der gegebenen Benutzerkennung angeben, wenn der Benutzer verifiziert wird, vom Identitätsauthentifikator für den Dienstanbieterknoten.

9. Verfahren nach Anspruch 8, wobei das Anfordern von Verifizierung der Benutzerkennung ein Herstellen einer Verbindung mit dem Benutzerendgerät durch den Identitätsauthentifikator basierend auf der gegebenen Benutzerkennung umfasst, wobei die gegebene Benutzerkennung mit dem Benutzerendgerät assoziiert ist.

10. Verfahren nach Anspruch 8 oder 9, wobei das Bestätigen der Authentifizierung der Benutzerkennung ein Bereitstellen durch die Authentifizierungskomponente von Informationen über die Authentifizierungsanforderung an den Benutzer, Auffordern des Benutzers zur Eingabe eines Kennworts, Empfangen (410) des Kennworts durch eine Benutzereingabe und Senden (415) von Daten, die das eingegebene Kennwort darstellen, über die sichere Assoziation an den Identitätsauthentifikator umfasst.

11. Verfahren nach einem der Ansprüche 8 bis 10, wobei das Erstellen der sicheren Assoziation ein Erstellen der sicheren Assoziation mit dem Identitätsauthentifikator nach dem Durchführen (205) einer Geräteauthentifizierung durch das Benutzerendgerät bei einem Mobilfunknetzwerkbetreiber umfasst.

12. Verfahren nach einem der Ansprüche 8 bis 11, ferner umfassend:
Anfordern (230) einer Netzwerkadresse des Identitätsauthentifikators durch den Dienstanbieterknoten von einem Authentifikatorregister; und
Bereitstellen (235) der Netzwerkadresse des Identitätsauthentifikators durch das Authentifikatorregister für den Dienstanbieterknoten.

13. Verfahren nach Anspruch 12, ferner umfassend:
Weiterleiten der Netzwerkadressenanforderung des Dienstanbieterknotens durch das Authentifikatorregister an ein anderes Authentifikatorregister, das auf einer höheren architektonischen Ebene als das Authentifikatorregister ist.

14. Verfahren nach einem der Ansprüche 8 bis 13, wobei das Auffordern des Identitätsauthentifikators durch den Dienstanbieterknoten zur Verifizierung einer gegebenen Benutzerkennung ein Hinzufügen mindestens einer von einer Dienstanbieteridentifikation, einer Benutzeragentenidentifikation, einer URl (Uniform Resource Locator) und einer Angabe, dass ein einmaliges Kennwort, OTP, erforderlich ist, zur Anforderung umfasst.

15. Computerprogramm, umfassend Programmcode, der bei Ausführung durch einen oder mehrere Prozessor(en) den einen oder die mehreren Prozessor(en) veranlasst, gemäß dem Verfahren nach der Ansprüche 8 bis 14 zu funktionieren.

## Revendications

1. Système d'authentification à identification unique, SSO, (100) comprenant :
un noeud de fournisseur de service (110) configuré pour fournir un accès à au moins un service sur un réseau (150) ;
un authentificateur d'identité (120) accessible sur le réseau ;
un terminal d'utilisateur (130) incluant un composant d'authentification (132) configuré pour construire une association sécurisée avec l'authentificateur d'identité ; et
un agent d'utilisateur (140) configuré pour accéder au noeud de fournisseur de service pour demander un service de l'au moins un service fourni,
dans lequel le noeud de fournisseur de service (110) est en outre configuré pour demander un identifiant d'utilisateur à un utilisateur par l'intermédiaire de l'agent d'utilisateur (140) et pour se connecter, une fois que le noeud de fournisseur de service (110) a reçu l'identifiant d'utilisateur en provenance de l'agent d'utilisateur (140), à l'authentificateur d'identité (120) par l'intermédiaire du réseau (150) pour demander à l'authentificateur d'identité (120) de vérifier un identifiant d'utilisateur donné, et
dans lequel l'authentificateur d'identité (120) est en outre configuré pour se connecter au composant d'authentification (132) du terminal d'utilisateur (130) pour vérifier l'identifiant d'utilisateur et pour fournir, au noeud de fournisseur de service (110), des informations de vérification indiquant la vérification de l'identifiant d'utilisateur donné.

2. Système d'authentification SSO (100) selon la revendication 1, dans lequel le composant d'authentification (132) sur le terminal d'utilisateur (130) est en outre configuré pour, lors de la vérification de l'identifiant d'utilisateur pour l'authentificateur d'identité (120), fournir des informations relatives à la demande d'authentification à l'utilisateur, demander un mot de passe à l'utilisateur et transmettre des données représentant un mot de passe reçu à l'authentificateur d'identité (120) par l'intermédiaire de l'association sécurisée avec l'authentificateur d'identité (120).

3. Système d'authentification SSO (100) selon la revendication 1 ou 2, dans lequel le composant d'authentification (132) est configuré pour construire l'association sécurisée avec l'authentificateur d'identité (120) après que le terminal d'utilisateur (130) a effectué une authentification de dispositif avec un opérateur de réseau mobile.

4. Système d'authentification SSO (100) selon l'une quelconque des revendications 1 à 3, comprenant en outre :
un registre d'authentificateur (160) configuré pour fournir une adresse de réseau de l'authentificateur d'identité (120),
dans lequel le noeud de fournisseur de service (110) est en outre configuré pour demander, au registre d'authentificateur (160), une adresse de réseau de l'authentificateur d'identité (120) pour l'identifiant d'utilisateur donné.

5. Système d'authentification SSO (100) selon l'une quelconque des revendications 1 à 4, dans lequel le noeud de fournisseur de service (110) est en outre configuré pour ajouter, à la demande de vérification de l'identifiant d'utilisateur donné, au moins l'un d'une identification de fournisseur de service, d'une identification d'agent d'utilisateur, d'un localisateur de ressource uniforme, URL, et d'une indication qu'un mot de passe à usage unique, OTP, est nécessaire.

6. Authentificateur d'identité (120) destiné à être employé dans un système d'authentification à identification unique, SSO, (100), l'authentificateur d'identité (120) comprenant :
un composant de réception (121) configuré pour recevoir une demande, en provenance d'un noeud de fournisseur de service (110), de vérification d'un identifiant d'utilisateur ;
un composant de connexion (122) configuré pour se connecter à un composant d'authentification (132) d'un terminal d'utilisateur (130) pour vérifier un identifiant d'utilisateur ; et
un composant de fourniture (123) configuré pour fournir, au noeud de fournisseur de service (110), des informations de vérification indiquant la vérification de l'identifiant d'utilisateur donné.

7. Terminal d'utilisateur (130) destiné à être employé dans un système d'authentification à identification unique, SSO, (100), le terminal d'utilisateur (130) comprenant :
un composant de connexion (131) configuré pour établir une connexion par l'intermédiaire d'un réseau (150) ou par l'intermédiaire d'une liaison directe (155) entre le terminal d'utilisateur (130) et un authentificateur d'identité (120) selon la revendication 6 ;
un composant d'authentification (132) configuré pour construire une association sécurisée avec l'authentificateur d'identité (120) par l'intermédiaire de la connexion ; et
un composant émetteur-récepteur (133) configuré pour recevoir et transmettre des données par l'intermédiaire de la connexion, dans lequel le composant émetteur-récepteur (133) est configuré pour recevoir une demande de vérification en provenance de l'authentificateur d'identité (120),
dans lequel le composant d'authentification (132) est en outre configuré pour fournir des informations relatives à la demande de vérification à un utilisateur, demander un mot de passe à l'utilisateur, et générer des données représentant le mot de passe, et dans lequel le composant émetteur-récepteur (133) est configuré pour transmettre les données à destination de l'authentificateur d'identité (120).

8. Procédé d'authentification à identification unique, SSO, le procédé comprenant :
la construction (210) d'une association sécurisée entre un composant d'authentification d'un terminal d'utilisateur et un authentificateur d'identité ;
l'accès (220), par un agent d'utilisateur, à un noeud de fournisseur de service pour demander un service ;
la demande (225), par le noeud de fournisseur de service, d'un identifiant d'utilisateur à un utilisateur par l'intermédiaire de l'agent d'utilisateur ;
la réception, par le noeud de fournisseur de service, de l'identifiant d'utilisateur en provenance de l'agent d'utilisateur ;
la connexion, par le noeud de fournisseur de service, une fois que l'identifiant d'utilisateur est reçu, à l'authentificateur d'identité ;
la demande (240), par le noeud de fournisseur de service, à l'authentificateur d'identité, de vérifier un identifiant d'utilisateur donné ;
la demande (250), par l'authentificateur d'identité, de la vérification de l'identifiant d'utilisateur au composant d'authentification sur le terminal d'utilisateur ;
la confirmation (260), par le composant d'authentification, d'une authentification de l'identifiant d'utilisateur à l'authentificateur d'identité ; et
la fourniture (270), de l'authentificateur d'identité au noeud de fournisseur de service, d'informations de vérification indiquant la vérification de l'identifiant d'utilisateur donné, si l'identifiant d'utilisateur est vérifié.

9. Procédé selon la revendication 8, dans lequel la demande d'une vérification de l'identifiant d'utilisateur comprend la connexion, par l'authentificateur d'identité, au terminal d'utilisateur, sur la base de l'identifiant d'utilisateur donné, l'identifiant d'utilisateur donné étant associé au terminal d'utilisateur.

10. Procédé selon la revendication 8 ou 9, dans lequel la confirmation d'une authentification de l'identifiant d'utilisateur comprend la fourniture, par le composant d'authentification, d'informations relatives à la demande d'authentification à l'utilisateur, la demande à l'utilisateur de saisir un mot de passe, la réception (410) du mot de passe par une saisie d'utilisateur et la transmission (415) des données représentant le mot de passe saisi à destination de l'authentificateur d'identité par l'intermédiaire de l'association sécurisée.

11. Procédé selon l'une quelconque des revendications 8 à 10, dans lequel la construction de l'association sécurisée comprend la construction de l'association sécurisée avec l'authentificateur d'identité après l'exécution (205), par le terminal d'utilisateur, d'une authentification de dispositif avec un opérateur de réseau mobile.

12. Procédé selon l'une quelconque des revendications 8 à 11, comprenant en outre :
la demande (230), par le noeud de fournisseur de service, d'une adresse de réseau de l'authentificateur d'identité à un registre d'authentificateur ; et
la fourniture (235), par le registre d'authentificateur, de l'adresse de réseau de l'authentificateur d'identité au noeud de fournisseur de service.

13. Procédé selon la revendication 12, comprenant en outre :
la procuration, par le registre d'authentificateur, de la demande d'adresse de réseau du noeud de fournisseur de service à un autre registre d'authentificateur qui est à un niveau architectural supérieur au registre d'authentificateur.

14. Procédé selon l'une quelconque des revendications 8 à 13, dans lequel la demande, par le noeud de fournisseur de service, à l'authentificateur d'identité de vérifier un identifiant d'utilisateur donné comprend l'ajout, à la demande, d'au moins l'un d'une identification de fournisseur de service, d'une identification d'agent d'utilisateur, d'un localisateur de ressource uniforme, URL, et d'une indication qu'un mot de passe à usage unique, OTP, est nécessaire.

15. Programme informatique, comprenant un code de programme qui, lorsqu'il est exécuté par un ou plusieurs processeurs, amènent les un ou plusieurs processeurs à fonctionner selon le procédé de l'une quelconque des revendications 8 à 14.
